# EUROPÄISCHE PATENTSCHRIFT

(11) **EP 2 082 491 B1**
(45) Veröffentlichungstag und Bekanntmachung des Hinweises auf die Patenterteilung: **11.11.2015**
(21) Anmeldenummer: 07802143.3
(22) Anmeldetag: 05.09.2007
(51) Int. Cl.: H04B 3/54, H02P 5/00, H02P 31/00

(54) **ANLAGE UND VERFAHREN ZUM BETREIBEN EINER ANLAGE**
INSTALLATION AND METHOD FOR OPERATING AN INSTALLATION
INSTALLATION ET PROCÉDÉ PERMETTANT DE LA FAIRE FONCTIONNER

(30) Priorität: 17.10.2006 DE 102006049507
(43) Veröffentlichungstag der Anmeldung: 29.07.2009
(73) Patentinhaber: SEW-EURODRIVE GmbH & Co. KG, 76646 Bruchsal (DE)
(72) Erfinder: BELZ, Helmut, 68753 Waghäusel (DE); MOOS, Benjamin, 75015 Bretten (DE); SCHMIDT, Josef, 76676 Graben-Neudorf (DE)
(86) Internationale Anmeldenummer: PCT/EP2007/007736
(87) Internationale Veröffentlichungsnummer: WO 2008/046473

(56) Entgegenhaltungen:
- WO-A-01/86831
- WO-A-02/51025
- WO-A-2007/059825
- DE-A1- 10 014 183
- JP-A- 57 038 035
- JP-A- 57 162 536

## Beschreibung

Die Erfindung betrifft eine Anlage und ein Verfahren zum Betreiben einer Anlage.

Antriebe umfassen oft Elektromotoren, die über Drehstromleitungen versorgt werden. Somit sind viele Anlagen mit Drehstromleitungen verkabelt ausgeführt. Allerdings muss für die über das Aus- und Anschalten hinaus gehende Informationsübertragung eine weitere Verkabelung vorgesehen werden, wie beispielsweise Feldbus-Verkabelung.

Aus der DE 100 14 183 A1 ist eine Anlage mit Motoren bekannt, wobei Informationen auf Leitungen aufmoduliert übertragbar sind.

Aus der DE 2007/059 825 A1 ist ein Antrieb bekannt, der über in der Anlage verlegte Leitungen mit einer Versorgungsspannungsquelle verbindbar ist, wobei Informationen zwischen einer Steuereinheit und Antrieb über die Leitungen übertragbar sind.

Der Erfindung liegt daher die Aufgabe zugrunde, die eine Anlage bezüglich Informationsübertragung weiterzubilden.

Erfindungsgemäß wird die Aufgabe bei der Anlage nach den in Anspruch 1 und bei dem Verfahren nach den in Anspruch 20 angegebenen Merkmalen gelöst.

Wichtige Merkmale der Erfindung bei der Anlage sind, dass sie einen Antrieb oder ein anderes Gerät umfasst, der oder das über in der Anlage verlegte elektrische Leitungen mittels einer Vorrichtung, insbesondere Steuereinheit, mit einer Versorgungsspannungsquelle, insbesondere Wechselspannungsquelle, verbindbar ist, wobei zwischen Steuereinheit und Antrieb oder dem anderen Gerät Informationen übertragbar sind unter Verwendung der Leitungen.

Von Vorteil ist dabei, dass die Versorgungsleitungen mit ihren Verbindungen zum Netz verwendet werden. Somit ist die verwendete Signalfrequenz niederfrequent, also weit unter 100 Hz, insbesondere weit unter 60Hz im US Bereich oder 50 Hz im europäischen Bereich. Der Vorteil liegt hierbei in der langen Reichweite der Informationsübertragung und in der Sicherheit der Datenübertragung. Denn da die Netzspannungen selbst verwendet sind, ist ein sicheres fehlerfreies Erkennen der Information ermöglicht. Außerdem ist die Reichweite erheblich im Vergleich zu Hochfrequenz-Aufmodulations-Anwendungen.

Weiterer Vorteil ist, dass die für die Erfindung notwendigen Mittel zur Realisierung sehr einfach und kostengünstig wählbar sind. Denn Versorgungsspannungen lassen sich einfach erkennen und bestimmen, insbesondere im Vergleich zur Erkennung von Hochfrequenzsignalen mit entsprechend aufwendiger Hochfrequenz-tauglicher Signalelektronik samt Ein- und Auskoppelungselementen oder Antennen.

Bei einer vorteilhaften Ausgestaltung sind vom Antrieb Mittel zum Erfassen der den Leitungen zugeordneten Versorgungsspannungen umfasst. Von Vorteil ist dabei, dass Widerstandsreihenschaltungen verwendbar sind, die einfach und kostengünstig herstellbar sind. Der Messwert ist dann von einem Analog-Digital-Wandler erfassbar und verarbeitbar. Alternativ ist auch eine analoge Mittelwertbildung mittels eines Tiefpassfilters anwendbar und Schwellwerte entweder digital oder analog vergleichbar.

Bei einer vorteilhaften Ausgestaltung sind drei Leitungen verwendet, wobei vom Antrieb Mittel zum Erfassen der Spannung zwischen jeder Leitung und einem Bezugspotential vorgesehen sind. Von Vorteil ist dabei, dass einfache Messwerterfassung ausreichend sind und somit die Erfindung ohne besonderen Aufwand ausführbar ist.

Bei einer vorteilhaften Ausgestaltung umfasst die Vorrichtung eine Halbwellensteuerung, insbesondere für zumindest eine der drei Leitungen. Von Vorteil ist dabei, dass die Netzspannung selbst verwendet wird und als Medium die positiven sowie negativen Halbwellen verwendbar sind.

Bei einer vorteilhaften Ausgestaltung sind zumindest Mittel zur Bildung der Differenz zweier der erfassten Spannungen vorgesehen. Von Vorteil ist dabei, dass durch die Differenzbildung eine sichere Erkennung der Zustände ausführbar ist und somit eine fehlerarme oder fehlerfreie Erkennung der Information ausführbar ist.

Bei einer vorteilhaften Ausgestaltung sind Mittel zur Kurvenauswertung vorgesehen, insbesondere Mittel zur Mittelwertbildung. Von Vorteil ist dabei, dass im zeitlichen Verlauf der Messwerte die übertragene Information sicher und fehlerfrei oder fehlerarm erkennbar ist.

Bei einer vorteilhaften Ausgestaltung ist als Mittel zur Kurvenauswertung Verstärkung, insbesondere Multiplikation mit einem Faktor, vorgesehen, insbesondere wobei dieser Faktor derart gewählt ist, dass die verstärkten Werte der zu übertragenden Information eindeutig zugeordnet sind, insbesondere entweder nach Mittelwertbildung der verstärkten Werte oder nach Kurvenauswertung, wobei bei der Kurvenauswertung zumindest auch das Feststellen eines Vorzeichenwechsels vorgesehen ist. Von Vorteil ist dabei, dass in sehr einfacher Weise eine sichere Unterscheidung zwischen den Zuständen ermöglicht ist.

Bei einer vorteilhaften Ausgestaltung sind Mittel zum Vergleichen mit Schwellwerten vorgesehen, wobei das Ergebnis des Vergleichens als übertragene Information verwendbar ist. Von Vorteil ist dabei, dass die Schwellwerte genügend Abstand voneinander haben und somit die Fehlerrate beim Erkennen der Zustände gering ist.

Bei einer vorteilhaften Ausgestaltung ist als Leitungen ein Drehstromkabel verwendbar. Von Vorteil ist dabei, dass die schon in der Anlage vorhandene Verkabelung unverändert nutzbar ist, also ein Nachrüsten einer bestehenden Anlage ausführbar ist.

Bei einer vorteilhaften Ausgestaltung ist während des Zeitintervalls, in welchem Information übertragen wird, der Antrieb nur mit zwei der drei Phasen voll versorgt. Von Vorteil ist dabei, dass auch während der Zeitdauer der Datenübertragung eine gewisse, wenn auch leicht reduzierte Leistung für den Antrieb bereitstellbar ist.

Bei einer vorteilhaften Ausgestaltung ist die Information auf der dritten Phase übertragbar, wobei diese von der Vorrichtung zeitlich nacheinander in verschiedene Zustände versetzbar sind zur Codierung der Information. Von Vorteil ist dabei, dass zwei der Phasen weiter zur Energieübertragung nutzbar sind und die dritte Phase zur sicheren Datenübertragung unter Verwendung der Netzspannungen nutzbar ist.

Bei einer vorteilhaften Ausgestaltung ist ein erster Zustand das Sperren negativer Stromanteile und ein zweiter Zustand das Sperren positiver Stromanteile ist. Von Vorteil ist dabei, dass einfach, klar und fehlersicher erkennbare Signale verwendet werden, die Anteile des Netzspannungs- und/oder Netzstromverlaufs umfassen.

Bei einer vorteilhaften Ausgestaltung ist ein dritter Zustand, die dritte Phase nicht zu verbinden, also den Strom zu sperren, und ein vierter Zustand ist, den Strom vollständig durchzuleiten. Von Vorteil ist dabei, dass sogar volle Leistung übertragbar ist.

Bei einer vorteilhaften Ausgestaltung umfasst der Antrieb eine Signalelektronik zum Empfangen und Decodieren der Information. Von Vorteil ist dabei, dass diese Signalelektronik in die Signalelektronik des Umrichters des Antriebs integrierbar ist.

Bei einer vorteilhaften Ausgestaltung umfasst der Antrieb eine elektronische Schaltung zur Umkehr des Drehsinns der dreiphasigen Versorgung. Von Vorteil ist dabei, dass ein Umrichter, Sanftanlaufgerät ebenso verwendbar ist wie ein steuerbares Umpolungsgerät, das zum Vertauschen zweier Phasen ansteuerbar betreibbar ist. Bei dem Umpolungsgerät sind elektronische oder auch elektromechanische Leistungsschalter verwendbar.

Bei einer vorteilhaften Ausgestaltung weist der Antrieb eine elektronische Schaltung zum Beeinflussen der Drehbewegung des Rotors des Elektromotors aufweist, insbesondere umfasst die Schaltung einen Motorschalter, Sanftanlauf oder Umrichter. Von Vorteil ist dabei, dass der Antrieb mit Intelligenz, also einem Rechner und zugehörigen Speicher, ausgeführt wird und somit eine komplexe Steuer- und/oder Regeleinheit integrierbar ist, die viele Aufgaben eigenständig ausführt. Somit genügt es, nur geringe Datenmengen oder Befehlsmengen an den Antrieb zu übertragen.

Bei einer vorteilhaften Ausgestaltung wechseln während des Zeitintervalls, in welchem Information übertragen wird, die zwei der drei Phasen zur Versorgung des Antriebs und ebenso wechselt die dritte Phase derart, dass stets die beiden anderen Phasen zur Versorgung der Signalelektronik des Antriebs vorgesehen sind und die dritte Phase zur Übertragung der Information vorgesehen ist. Von Vorteil ist dabei, dass eine klare Trennung der Funktionen vorgesehen ist und somit eine Entkoppelung von Leistung und Informationsübertragung.

Bei einer vorteilhaften Ausgestaltung weist die Vorrichtung eine der dritten Phase zugeordnete Reihenschaltung von Leistungsschaltern, insbesondere zum Sperren oder Durchlassen der positiven und negativen Stromanteile, auf. Von Vorteil ist dabei, dass eine einfach ausgeführte Halbwellensteuerung verwendbar ist.

Bei einer vorteilhaften Ausgestaltung sind die Leistungsschalter von einer Steuerung ansteuerbar. Von Vorteil ist dabei, dass diese Steuerung mit einer übergeordneten SPS oder einem Zentralrechner verbindbar ist und somit Daten übertragbar sind.

Bei einer vorteilhaften Ausgestaltung umfasst der Antrieb einen aus den Leitungen versorgten Gleichrichter, dessen unipolare insbesondere gleichgerichtete, Ausgangsspannung ein negatives und positives Potential aufweist. Insbesondere ist die Signalelektronik des Antriebs auf dem negativen Potential vorgesehen, insbesondere die Spannung zwischen den elektrischen Kontakten der Bauelemente der Signalelektronik und dem negativen Potential betragsmäßig stets kleiner ist als die Spannung zum positiven Potential. Von Vorteil ist dabei, dass die Signalelektronik auf einem derartigen Potential als Bezugspotential anordenbar ist und somit die Spannungen der Leitungen zu diesem Potential erfassbar sind.

Wichtige Merkmale bei dem Verfahren zum Betreiben einer Anlage sind, dass sie einen Antrieb umfasst, der über in der Anlage verlegte elektrische Leitungen mittels einer Vorrichtung, insbesondere Steuereinheit, mit einer Versorgungsspannungsquelle, insbesondere Wechselspannungsquelle, verbindbar ist, wobei zwischen Steuereinheit und Antrieb Informationen über die Leitungen übertragen werden, wobei
- die den Leitungen zugeordneten Versorgungsspannungen umfasst werden,
- zumindest die Differenz zweier der erfassten Spannungen gebildet wird,
- eine Kurvenauswertung ausgeführt wird.

Von Vorteil ist dabei, dass eine einfache Vorgehensweise angewendet wird, wie Differenzbildung und Kurvenauswertung. Somit ist der Aufwand gering und die Erkennbarkeit der Information gut sowie die Fehlerrate gering.

Bei einer vorteilhaften Ausgestaltung wird zumindest zu Beginn diejenige der Leitungen erkannt, auf welcher die Information übertragen wird, insbesondere indem Mittelwerte der Spannungsverläufe der Phasen verglichen werden. Von Vorteil ist dabei, dass diejenige Phase erkennbar ist, auf der die Information übertragen wird. Somit kann zu Beginn in einem ersten Zeitabschnitt diejenige Phase bestimmt werden, auf der die Information codiert ist, und danach ist dann die Informationsübertragung ausführbar. Dabei sind weitere Maßnahmen, wie Differenzbildung und insbesondere auch Kurvenauswertung, nur für die für die Informationsübertragung als relevant erkannte Phase notwendig ist. Maßnahmen, wie die Differenzbildung zu den anderen Phasen bilden das Verfahren zu Datenübertragung weiter, insbesondere wird dadurch auch die Sicherheit zum Erkennen eines Zustandes verbessert, also die Fehlerrate vermindert.

Bei einer vorteilhaften Ausgestaltung wird als Kurvenauswertung eine Mittelwertbildung ausgeführt. Von Vorteil ist dabei, dass ein äußerst geringer Aufwand für die Erfindung notwendig ist.

Bei einer vorteilhaften Ausgestaltung wird mit Schwellwerten verglichen und wird das Ergebnis des Vergleichens als übertragene Information verwendet. Von Vorteil ist dabei, dass durch Vergleichen mit entsprechenden Schwellwerten die Zustände klar erkennbar sind. Vorteiligerweise sind bei vier Zuständen drei Schwellwerte zu setzen. Da aber auch für jeden Zustand einer oder mehr Schwellwerte vorsehbar sind, ist es vorteilhaft diese eng um die zu erwartenden Messwerte zu setzen. Somit ist dann eine Fehlererkennbarkeit verbessert.

Weitere Vorteile ergeben sich aus den Unteransprüchen.

### Bezugszeichenliste

- 1: Ansteuerung
- 2: Vorrichtung
- 3: Umrichter
- 4: Spannungserfassung
- 5: Gleichrichter für Drehstrom
- 6: Steuersignal
- L1, L2, L3: Versorgungsleitungen
- L1*, L2*, L3*: Messwerte

Die Erfindung wird nun anhand von Abbildungen näher erläutert:

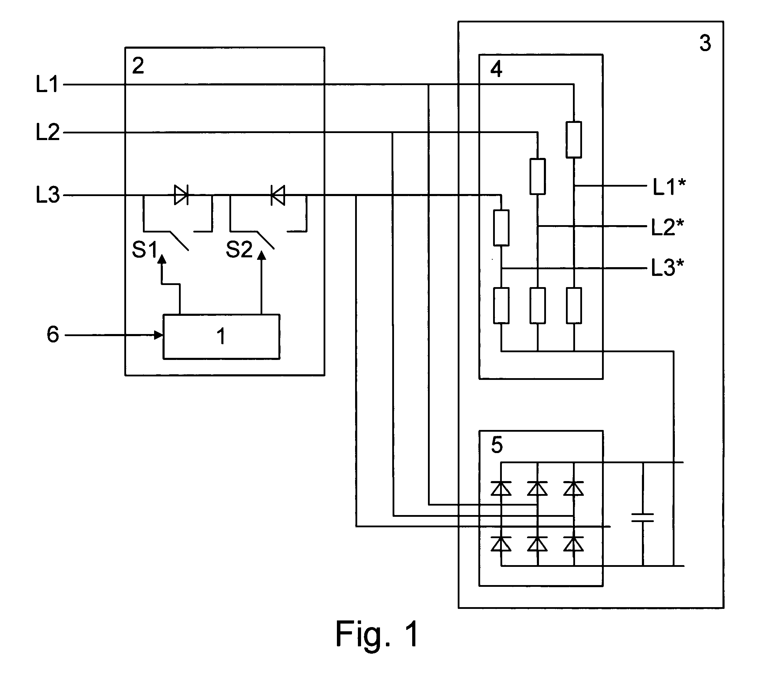

In der Figur 1 ist ein erfindungsgemäßes System gezeigt. Dabei ist eine Vorrichtung 2 vorgesehen, die Schalter (S1, S2) zum Sperren oder Durchlassen der positiven oder negativen Halbwellen einer Phase umfasst.

Die Schalter (S1, S2) werden aus einer Ansteuerung heraus angesteuert, die einen als Steuersignal 6 in sie eintretenden Informationsfluss mittels der zugehörigen Versorgungsleitung an einen Antrieb übertragen soll.

Der Antrieb umfasst dabei mindestens einen Umrichter 3 zur Versorgung eines Elektromotors. Der Antrieb umfasst den Elektromotor vorzugsweise in mit dem Umrichter 3 integriert ausgebildeter Ausführungsart.

Der Antrieb ist in einer weiteren erfindungsgemäßen Variante auch mit einem Getriebe als Kompaktantrieb ausführbar. Somit ist nur ein einziges Gehäuse für das vom Elektromotor angetriebene Getriebe zusammen mit dem Umrichter 3 notwendig. Ein solcher Antrieb ist somit über seine Netzversorgungsleitungen sowohl mit Energie als auch mit Information versorgbar.

Der Umrichter nach Figur 1 wird über Versorgungsleitungen (L1, L2, L3) versorgt. Dabei ist die Vorrichtung 2 nach Figur 1 derart ausgeführt, dass die Schalter (S1, S2) jeweils einer Diode parallel geschaltet sind und zueinander in Reihe geschaltet sind. Somit ist entweder die gesamte Versorgungsleitung L3 in einem ersten Schaltzustand aufgetrennt. In einem zweiten Schaltzustand ist nur die positive Halbwelle freigegeben, in einem dritten nur die negative. In einem vierten Schaltzustand ist die Versorgungsleitung zur Durchleitung des vollen Stromes vorsehbar.

Die vier Schaltzustände werden zur Codierung der zu übertragenden Information verwendet.

Dabei ist es notwendig, dass im Bereich des Antriebes der jeweilige Schaltzustand sicher erkannt wird.

Der genannte Umrichter des Antriebs umfasst einen Gleichrichter 5 für Drehstrom, dem ein Glättungskondensator ausgangsseitig zugeordnet ist. Aus der an diesem Kondensator anliegenden sogenannten Zwischenkreisspannung wird auch der Wechselrichter, also die Endstufe, des Umrichters versorgt, die wiederum den Elektromotor versorgt.

Mittels der Spannungserfassung 4 werden die Messwerte (L1*, L2*, L3*) erfasst, die die Spannung der Versorgungsleitungen (L1, L2, L3) gegen das negative Potential des Gleichrichters 5 repräsentieren.

Jeder der Messwerte wird einer Auswertung unterzogen. Bei einem ersten erfindungsgemäßen Ausführungsbeispiel wird hierbei der jeweilige Mittelwert gebildet. Der kleinste der drei Mittelwerte ist derjenigen Phase L3 zugeordnet, an der die verschiedenen Schaltzustände wirksam werden, also auf der die Information übertragen wird. Nur im vierten Schaltzustand ist die Phase nicht unterscheidbar von den anderen beiden Phasen (L1, L2).

Der Mittelwert wird vorteiligerweise über eine Zeitspanne gebildet, die einer oder mehreren Netzperioden entspricht, also 20ms oder ein Ganzzahliges Vielfaches hiervon bei 50Hz. Vorzugswiese wird aber die Zeitspanne derart gewählt, dass sie auch ein Ganzzahliges Vielfaches einer Netzperiode eines anderen Netzes darstellt. Beispielsweise ist also eine Wahl von 100ms vorteilhaft, da somit die Vorrichtung bei 50Hz und bei 60Hz einsetzbar ist.

Somit ist eine Erkennung der für die Informationsübertragung relevanten Phase in einfacher Weise durch Mittelwertbildung der zugehörigen Spannung ermöglicht.

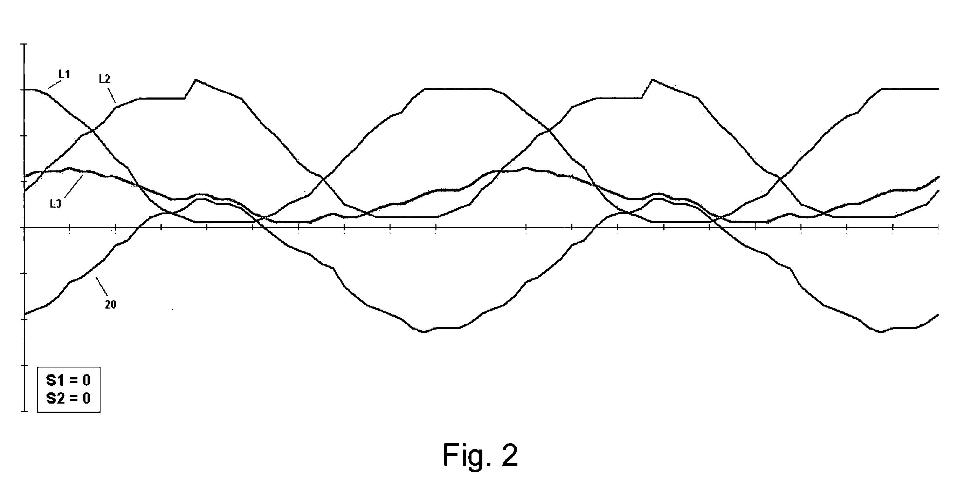

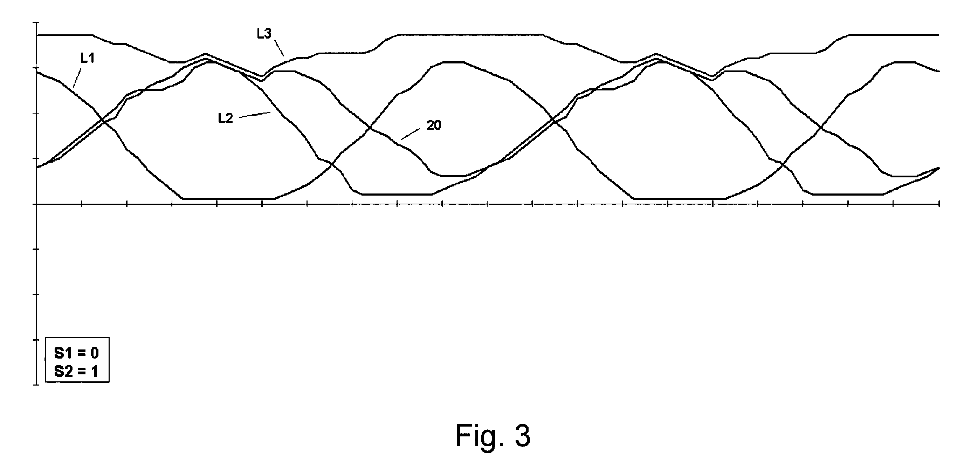

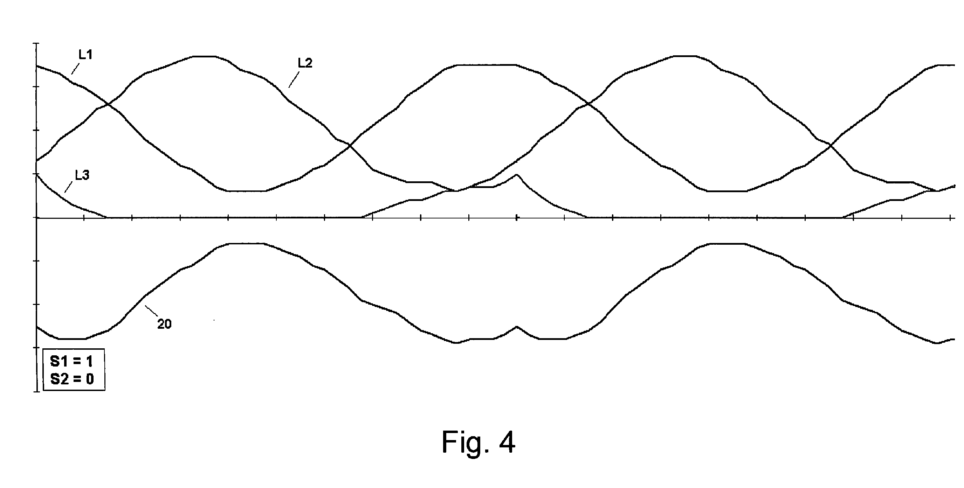

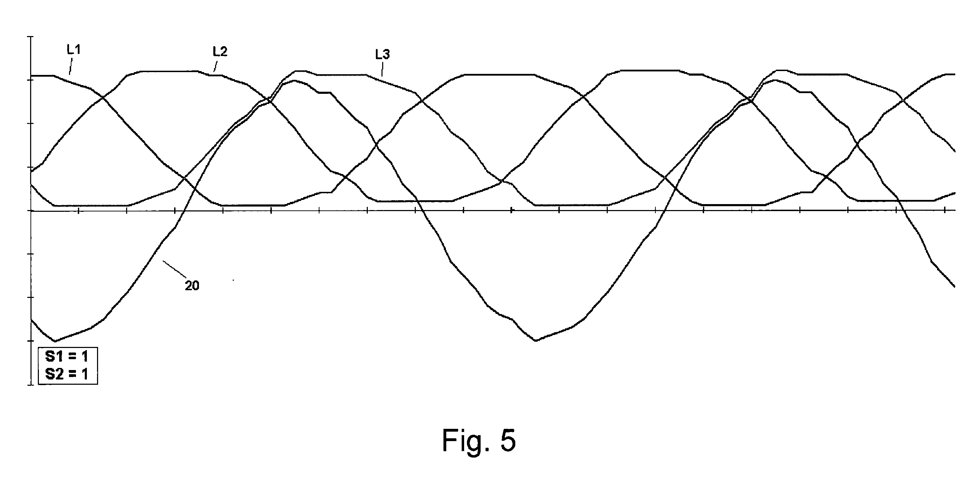

Des Weiteren wird nach dem Erkennen der Information übertragenden Phase die Differenz gebildet von der erkannten Phase L3 zu einer der beiden anderen Phasen (L1, L2). In den Figuren 2, 3, 4, 5 sind für den ersten, zweiten, dritten und vierten Schaltzustand beispielhafte Messwertverläufe dargestellt. Dabei ist mit Bezugszeichen 20 die Differenz der Phase L3 zur Phase L1 dargestellt. Die Mittelwertbildung wird auf diese Verläufe angewendet. Auf diese Weise ist eine sichere Erkennung der Zustände der die Information enthaltenden Phase ermöglicht, also auch die Fehlerrate bei der Datenübertragung verringerbar.

Jeder der vier Schaltzustände ist mittels Schwellwerten charakterisierbar. Auch wenn Störspannungen auftreten, sind die Schwellwerte soweit auseinander, dass eine eindeutige und sichere Erkennung der Schaltzustände ausführbar ist. Dies ist ein besonderer Vorteil dieses Verfahrens.

Der Antrieb wertet nach Erkennung des jeweiligen Schaltzustandes den nächsten auch in Abhängigkeit vom vorherigen aus. Somit ist auch eine allgemeine Datenübertragung ermöglicht. Es ist also nicht nur eine Information für Stopp-Befehl, ein Handbetrieb, ein Rechtsdrehen und ein Linksdrehen des Motors übertragbar sondern sogar weitere Information, wie beispielsweise ein Fehler-Reset oder dergleichen. Diese weitere Information ist in der zeitlichen Abfolge der Schaltzustände eindeutig und unverwechselbar codierbar.

Das Steuersignal für die Steuerung 1 ist beispielsweise als 0 Volt oder 24 Volt Signal verwendbar. Es sind aber auch andere Signalsorten verwendbar.

Vorteilig ist bei der Erfindung auch, dass Anlagen, in welchen schon ein Drehstromkabel verlegt war nachrüstbar sind, indem die erfindungsgemäße Vorrichtung eingesetzt wird und der Antrieb durch einen entsprechend der Erfindung ausgeführten ersetzt wird.

Vorteil der Erfindung ist auch, dass die auswertende Signalelektronik auf dem Potential des negativen Potentials der Zwischenkreisspannung vorsehbar ist. Somit ist die gesamte Steuerelektronik des Umrichters gemeinsam mit der Signalelektronik dort vorsehbar.

Die Auswertung der Messwertsignale ist entweder analog oder digital ausführbar. Im letztgenannten Fall umfasst hierzu die Signalelektronik zumindest einen Analog-Digital-Wandler.

Bei weiteren erfindungsgemäßen Ausführungsbeispielen wird statt der Mittelwertbildung eine andere Kurvenauswertung der Verläufe der Messwerte ausgeführt. Beispielsweise wird der Messwert der Phase L3 mit einem geeigneten Faktor verstärkt. Der Faktor ist dabei derart wählbar, dass im zweiten Schaltzustand der positive Maximalwert dauerhaft anliegt, im dritten der negative Maximalwert, im ersten ein von Null deutlich verschiedener Wert, der zwischen positivem und negativem Maximalwert liegt, und im vierten ein Wert, der in einem engen Band um Null herum liegt.

Bei weiteren erfindungsgemäßen Ausführungsbeispielen wird statt der Mittelwertbildung eine andere Kurvenauswertung vorgenommen.

Bei weiteren erfindungsgemäßen Ausführungsbeispielen ist der Antrieb ein Umrichtermotor oder ein Getriebemotor oder ein Umrichtergetriebemotor. Alternativ ist der Antrieb als einfacher Elektromotor ausgeführt, wobei dann allerdings nur die zugeführte Leistung entsprechend der vier Schaltzustände zuführbar ist.

Bei weiteren erfindungsgemäßen Ausführungsbeispielen ist die Steuerung S mit Mitteln zur Eingabe der Information, wie Schalter, Drucktaster Schieber oder Drehknopf oder dergleichen versehen. Vorzugsweise ist somit ein Knopf für Rechtsdrehung und ein Knopf für Linksdrehung vorgesehen. Entsprechend werden Steuersignale erzeugt und codiert.

Bei anderen erfindungsgemäßen Ausführungsbeispielen ist die Steuerung 1 mit einem Bussystem verbunden, umfassend eine 24 Volt Versorgungsleitung. Die Steuersignale sind dann also erzeugbar und codierbar durch eine übergeordnete Steuerung.

Die Vorrichtung 2 ist also nach Art einer elektronischen Steuereinheit aufgebaut.

Bei anderen erfindungsgemäßen Ausführungsbeispielen ist statt der Drehstromleitung eine einphasige Versorgungsleitung verwendet. Dabei funktioniert die Informationsübertragung in analoger Weise.

Bei anderen erfindungsgemäßen Ausführungsbeispielen werden statt der Antriebe oder Umrichter 3 andersartige Geräte angeschlossen, an die in der gleichen Weise Information übertragen wird, wie geschildert bei den Antrieben. Als solche Geräte sind insbesondere Zähleinrichtungen, wie Stromzähler oder Gaszähler verwendbar. Somit ist eine zeitabhängige Verbrauchsbestimmung und/oder eine Fernsteuerung und/oder Fernabfrage von solchen Zähleinrichtungen ermöglicht.

## Patentansprüche

1. Anlage,
umfassend einen Antrieb, das über in der Anlage verlegte elektrische Leitungen mittels einer Vorrichtung, also Steuereinheit, mit einer Versorgungsspannungsquelle, also Wechselspannungsquelle, verbunden ist,
**dadurch gekennzeichnet, dass**
zwischen Steuereinheit und Antrieb Informationen übertragen werden unter Verwendung der Leitungen,
wobei vom Antrieb Mittel zum Erfassen der den Leitungen zugeordneten Versorgungsspannungen umfasst sind
wobei Mittel zur Kurvenauswertung vorgesehen sind,
wobei als Mittel zur Kurvenauswertung Verstärkung, also Multiplikation mit einem Faktor, vorgesehen ist, wobei dieser Faktor derart gewählt ist, dass die verstärkten Werte der zu übertragenden Information eindeutig zugeordnet sind.

2. Anlage nach Anspruch 1,
**dadurch gekennzeichnet, dass**
drei Leitungen verwendet sind, wobei vom Antrieb Mittel zum Erfassen der Spannung zwischen jeder Leitung und einem Bezugspotential vorgesehen sind.

3. Anlage nach Anspruch 2,
**dadurch gekennzeichnet, dass**
die Vorrichtung eine Halbwellensteuerung umfasst für zumindest eine der drei Leitungen.

4. Anlage nach einem der vorangegangenen Ansprüche,
**dadurch gekennzeichnet, dass**
zumindest Mittel zur Bildung der Differenz zweier der erfassten Spannungen vorgesehen sind.

5. Anlage nach einem der vorangegangenen Ansprüche,
**dadurch gekennzeichnet, dass**
als Mittel zur Kurvenauswertung Mittel zur Mittelwertbildung vorgesehen sind.

6. Anlage nach einem der vorangegangenen Ansprüche,
**dadurch gekennzeichnet, dass**
als Mittel zur Kurvenauswertung Verstärkung, also Multiplikation mit einem Faktor, vorgesehen ist, wobei dieser Faktor derart gewählt ist, dass die verstärkten Werte der zu übertragenden Information eindeutig zugeordnet sind,
entweder nach Mittelwertbildung der verstärkten Werte oder nach Kurvenauswertung, wobei bei der Kurvenauswertung zumindest auch das Feststellen eines Vorzeichenwechsels vorgesehen ist.

7. Anlage nach einem der vorangegangenen Ansprüche,
**dadurch gekennzeichnet, dass**
Mittel zum Vergleichen mit Schwellwerten vorgesehen sind, wobei das Ergebnis des Vergleichens als übertragene Information verwendet wird.

8. Anlage nach einem der vorangegangenen Ansprüche,
**dadurch gekennzeichnet, dass**
während des Zeitintervalls, in welchem Information übertragen wird, der Antrieb nur mit zwei der drei Phasen voll versorgt ist.

9. Anlage nach Anspruch 8,
**dadurch gekennzeichnet, dass**
die Information auf der dritten Phase übertragen wird, wobei diese von der Vorrichtung zeitlich nacheinander in verschiedene Zustände versetzt wird zur Codierung der Information.

10. Anlage nach einem der vorangegangenen Ansprüche,
**dadurch gekennzeichnet, dass**
ein erster Zustand das Sperren negativer Stromanteile ist und
ein zweiter Zustand das Sperren positiver Stromanteile ist,
und/oder dass
ein dritter Zustand ist, die dritte Phase nicht zu verbinden, also den Strom zu sperren und ein vierter Zustand ist, den Strom vollständig durchzuleiten.

11. Anlage nach einem der vorangegangenen Ansprüche,
**dadurch gekennzeichnet, dass**
der Antrieb eine Signalelektronik zum Empfangen und Decodieren der Information umfasst,

12. Anlage nach einem der vorangegangenen Ansprüche,
**dadurch gekennzeichnet, dass**
der Antrieb eine elektronische Schaltung zum Umkehr des Drehsinns der dreiphasigen Versorgung umfasst,

13. Anlage nach einem der vorangegangenen Ansprüche,
**dadurch gekennzeichnet, dass**
der Antrieb eine elektronische Schaltung zum Beeinflussen der Drehbewegung des Rotors des Elektromotors aufweist.

14. Anlage nach einem der vorangegangenen Ansprüche,
**dadurch gekennzeichnet, dass**
während des Zeitintervalls, in welchem Information übertragen wird, die zwei der drei Phasen zur Versorgung des Antriebs wechseln und ebenso die dritte Phase derart wechselt, dass stets die beiden anderen Phasen zur Versorgung der Signalelektronik des Antriebs vorgesehen sind und die dritte Phase zur Übertragung der Information vorgesehen ist,

15. Anlage nach einem der vorangegangenen Ansprüche,
**dadurch gekennzeichnet, dass**
die Vorrichtung eine der dritten Phase zugeordnete Reihenschaltung von Leistungsschaltern zum Sperren oder Durchlassen der positiven und negativen Stroms aufweist.

16. Anlage nach einem der vorangegangenen Ansprüche,
**dadurch gekennzeichnet, dass**
die Leistungsschalter von einer Steuerung angesteuert werden.

17. Anlage nach einem der vorangegangenen Ansprüche,
**dadurch gekennzeichnet, dass**
der Antrieb einen aus den Leitungen versorgten Gleichrichter umfasst, dessen unipolare gleichgerichtete Ausgangsspannung ein negatives und positives Potential aufweist,

18. Anlage nach einem der vorangegangenen Ansprüche,
**dadurch gekennzeichnet, dass**
das negative Potential Bezugspotential ist,

19. Anlage nach einem der vorangegangenen Ansprüche,
**dadurch gekennzeichnet, dass**
die Signalelektronik des Antriebs auf dem negativen Potential vorgesehen ist, also die Spannung zwischen den elektrischen Kontakten der Bauelemente der Signalelektronik und dem negativen Potential betragsmäßig stets kleiner ist als die Spannung zum positiven Potential.

20. Verfahren zum Betreiben einer Anlage,
umfassend einen Antrieb, der über in der Anlage verlegte elektrische Leitungen mittels einer Vorrichtung, also Steuereinheit, mit einer Versorgungsspannungsquelle, also Wechselspannungsquelle, verbunden ist,
**dadurch gekennzeichnet, dass**
zwischen Steuereinheit und Antrieb Informationen über die Leitungen übertragen werden, wobei
- die den Leitungen zugeordneten Versorgungsspannungen erfasst werden,
- zumindest die Differenz zweier der erfassten Spannungen gebildet wird,
- eine Kurvenauswertung ausgeführt wird,
wobei als Kurvenauswertung Verstärkung, also Multiplikation mit einem Faktor, vorgesehen ist, wobei dieser Faktor derart gewählt ist, dass die verstärkten Werte der zu übertragenden Information eindeutig zugeordnet sind.

21. Verfahren nach Anspruch 20,
**dadurch gekennzeichnet, dass**
zumindest zu Beginn diejenige der Leitungen erkannt wird, auf welcher die Information übertragen wird, indem Mittelwerte von Spannungen verglichen werden.

22. Verfahren nach Anspruch 20 oder 21,
**dadurch gekennzeichnet, dass**
als Kurvenauswertung eine Mittelwertbildung ausgeführt wird,

23. Verfahren nach einem der Ansprüche 20-22,
**dadurch gekennzeichnet, dass**
mit Schwellwerten vergleichen wird und das Ergebnis des Vergleichens als übertragene Information verwendet wird.

## Claims

1. System,
comprising a drive which is connected to a supply voltage source, that is an alternating voltage source, by means of an apparatus, that is a control unit, via electric lines installed in the system,
**characterised in that**
information is transmitted between the control unit and the drive, using the lines,
wherein the drive comprises means for measuring the supply voltages assigned to the lines
wherein means for curve evaluation are provided,
wherein amplification, that is multiplication by a factor, is provided as the means for curve evaluation, this factor being selected such that the amplified values are uniquely assigned to the information to be transmitted.

2. System according to Claim 1,
**characterised in that**
three lines are used, means for measuring the voltage between each line and a reference potential being provided by the drive.

3. System according to Claim 2,
**characterised in that**
the apparatus comprises a half-wave control for at least one of the three lines.

4. System according to one of the preceding claims,
**characterised in that**
at least means for forming the difference between two of the measured voltages are provided.

5. System according to one of the preceding claims,
**characterised in that**
means for averaging are provided as the means for curve evaluation.

6. System according to one of the preceding claims,
**characterised in that**
amplification, that is multiplication by a factor, is provided as the means for curve evaluation, this factor being selected such that the amplified values are uniquely assigned to the information to be transmitted,
either after averaging the amplified values or after curve evaluation, at least also the determination of a sign reversal being provided in the curve evaluation.

7. System according to one of the preceding claims,
**characterised in that**
means for comparison with threshold values are provided, the result of the comparison being used as transmitted information.

8. System according to one of the preceding claims,
**characterised in that**
during the time interval in which information is transmitted, the drive is fully powered by only two of the three phases.

9. System according to Claim 8,
**characterised in that**
the information is transmitted on the third phase, the latter being put by the apparatus into different states one after another in time, to code the information.

10. System according to one of the preceding claims,
**characterised in that**
a first state is the blocking of negative current components and a second state is the blocking of positive current components,
and/or **in that**
a third state is not to connect the third phase, thus to block the current, and a fourth state is to let the current through completely.

11. System according to one of the preceding claims,
**characterised in that**
the drive comprises signal electronics to receive and decode the information.

12. System according to one of the preceding claims,
**characterised in that**
the drive comprises an electronic circuit to reverse the sense of rotation of the three-phase supply.

13. System according to one of the preceding claims,
**characterised in that**
the drive has an electronic circuit to influence the rotary motion of the rotor of the electric motor.

14. System according to one of the preceding claims,
**characterised in that**
during the time interval in which information is transmitted, the two of the three phases for powering the drive change, and likewise the third phase changes such that the two other phases are always provided for powering the signal electronics of the drive, and the third phase is provided for transmitting the information.

15. System according to one of the preceding claims,
**characterised in that**
the apparatus has a series connection of power switches assigned to the third phase for blocking or letting through the positive and negative current.

16. System according to one of the preceding claims,
**characterised in that**
the power switches are driven by a control.

17. System according to one of the preceding claims,
**characterised in that**
the drive comprises a rectifier, supplied from the lines, the unipolar rectified output voltage of which has a negative and positive potential.

18. System according to one of the preceding claims,
**characterised in that**
the negative potential is reference potential.

19. System according to one of the preceding claims,
**characterised in that**
the signal electronics of the drive are provided at the negative potential, thus the voltage between the electrical contacts of the components of the signal electronics and the negative potential is always lower in terms of absolute value than the voltage to the positing potential.

20. Method for operating a system,
comprising a drive which is connected to a supply voltage source, that is an alternating voltage source, by means of an apparatus, that is a control unit, via electric lines installed in the system,
**characterised in that**
information is transmitted between the control unit and the drive via the lines, wherein
- the supply voltages assigned to the lines are measured,
- at least the difference between two of the measured voltages is formed,
- a curve evaluation is performed,
wherein amplification, that is multiplication by a factor, is provided as the curve evaluation, this factor being selected such that the amplified values are uniquely assigned to the information to be transmitted.

21. Method according to Claim 20,
**characterised in that**
at least at the beginning, that one of the lines on which the information is transmitted is recognised by comparing average values of voltages.

22. Method according to Claim 20 or 21,
**characterised in that**
averaging is performed as the curve evaluation.

23. Method according to one of Claims 20-22,
**characterised in that**
a comparison with threshold values is performed and the result of the comparison is used as transmitted information.

## Revendications

1. Installation,
comprenant un entraînement qui est relié par des lignes électriques posées dans l'installation par l'intermédiaire d'un dispositif, c'est-à-dire d'une unité de commande, à une source de tension d'alimentation, c'est-à-dire une source de tension alternative,
**caractérisée en ce**
**que** des informations sont transmises entre unité de commande et entraînement en utilisant les lignes,
l'entraînement comprenant des moyens pour détecter les tensions d'alimentation associées aux lignes,
des moyens d'évaluation de courbe étant prévus,
une amplification, c'est-à-dire une multiplication par un facteur, étant prévue comme moyen d'évaluation de courbe, ce facteur étant choisi de façon que les valeurs amplifiées soient associées sans ambiguïté à l'information à transmettre.

2. Installation selon la revendication 1,
**caractérisée en ce**
**que** trois lignes sont utilisées, l'entraînement comportant des moyens pour détecter la tension entre chaque ligne et un potentiel de référence.

3. Installation selon la revendication 2,
**caractérisée en ce**
**que** le dispositif comprend une commande demi-onde pour au moins une des trois lignes.

4. Installation selon l'une des revendications précédentes,
**caractérisée en ce**
**qu'**au moins des moyens pour former la différence de deux des tensions détectées sont prévus.

5. Installation selon l'une des revendications précédentes,
**caractérisée en ce**
**que** des moyens de formation de moyenne sont prévus en tant que moyen d'évaluation de courbe.

6. Installation selon l'une des revendications précédentes,
**caractérisée en ce**
**qu'**une amplification, c'est-à-dire une multiplication par un facteur, est prévue comme moyen d'évaluation de courbe, ce facteur étant choisi de façon que les valeurs amplifiées soient associées sans ambiguïté à l'information à transmettre,
soit après formation de la moyenne des valeurs amplifiées, soit après évaluation de courbe, au moins aussi la détection d'un changement de signe étant prévue lors de l'évaluation de courbe.

7. Installation selon l'une des revendications précédentes,
**caractérisée en ce**
**que** des moyens de comparaison avec des valeurs seuils sont prévus, le résultat de la comparaison étant utilisé comme information transmise.

8. Installation selon l'une des revendications précédentes,
**caractérisée en ce**
**que** pendant l'intervalle de temps dans lequel l'information est transmise, l'entraînement est pleinement alimenté seulement par deux des trois phases.

9. Installation selon la revendication 8,
**caractérisée en ce**
**que** l'information est transmise sur la troisième phase, celle-ci étant mise dans différents états successivement dans le temps par le dispositif dans un but de codage de l'information.

10. Installation selon l'une des revendications précédentes,
**caractérisée en ce**
**qu'**un premier état est le blocage de composantes de courant négatives et un deuxième état le blocage de composantes de courant positives,
et/ou
**qu'**un troisième état consiste à ne pas relier la troisième phase, c'est-à-dire à bloquer le courant, et un quatrième état à laisser passer entièrement le courant.

11. Installation selon l'une des revendications précédentes,
**caractérisée en ce**
**que** l'entraînement comprend une électronique de signalisation pour recevoir et décoder l'information.

12. Installation selon l'une des revendications précédentes,
**caractérisée en ce**
**que** l'entraînement comprend un circuit électronique pour inverser le sens de rotation de l'alimentation triphasée.

13. Installation selon l'une des revendications précédentes,
**caractérisée en ce**
**que** l'entraînement comprend un circuit électronique pour influencer le mouvement de rotation du rotor du moteur électrique.

14. Installation selon l'une des revendications précédentes,
**caractérisée en ce**
**que** pendant l'intervalle de temps dans lequel l'information est transmise, les deux des trois phases utilisées pour l'alimentation de l'entraînement changent et la troisième phase change également de façon qu'à tout moment les deux autres phases soient prévues pour l'alimentation de l'électronique de signalisation de l'entraînement et la troisième phase soit prévue pour la transmission de l'information.

15. Installation selon l'une des revendications précédentes,
**caractérisée en ce**
**que** le dispositif présente un montage en série de commutateurs de puissance associé à la troisième phase pour bloquer ou laisser passer le courant positif et négatif.

16. Installation selon l'une des revendications précédentes,
**caractérisée en ce**
**que** les commutateurs de puissance sont commandés par une commande.

17. Installation selon l'une des revendications précédentes,
**caractérisée en ce**
**que** l'entraînement comprend un redresseur alimenté à partir des lignes, dont la tension de sortie unipolaire redressée présente un potentiel négatif et positif.

18. Installation selon l'une des revendications précédentes,
**caractérisée en ce**
**que** le potentiel négatif est le potentiel de référence.

19. Installation selon l'une des revendications précédentes,
**caractérisée en ce**
**que** l'électronique de signalisation de l'entraînement est prévue sur le potentiel négatif, c'est-à-dire que la tension entre les contacts électriques des composants de l'électronique de signalisation et le potentiel négatif est toujours inférieure en valeur absolue à la tension par rapport au potentiel positif.

20. Procédé pour faire fonctionner une installation,
comprenant un entraînement qui est relié par des lignes électriques posées dans l'installation par l'intermédiaire d'un dispositif, c'est-à-dire d'une unité de commande, à une source de tension d'alimentation, c'est-à-dire une source de tension alternative,
**caractérisé en ce**
**que** des informations sont transmises entre unité de commande et entraînement par les lignes, selon lequel procédé
- les tensions d'alimentation associées aux lignes sont détectées,
- au moins la différence de deux des tensions détectées est formée,
- une évaluation de courbe est effectuée,
une amplification, c'est-à-dire une multiplication par un facteur, étant prévue comme évaluation de courbe, ce facteur étant choisi de façon que les valeurs amplifiées soient associées sans ambiguïté à l'information à transmettre.

21. Procédé selon la revendication 20,
**caractérisé en ce**
**qu'**au moins au début, celle des lignes sur laquelle l'information est transmise est détectée en comparant des valeurs moyennes de tensions.

22. Procédé selon l'une des revendications 20 ou 21,
**caractérisé en ce**
**qu'**une formation de moyenne est effectuée en tant qu'évaluation de courbe.

23. Procédé selon l'une des revendications 20 à 22,
**caractérisé en ce**
**qu'**une comparaison avec des valeurs seuils est effectuée et le résultat de la comparaison est utilisé comme information transmise.
